# EUROPEAN PATENT SPECIFICATION

(11) **EP 2 819 957 B1**
(45) Date of publication and mention of the grant of the patent: **08.11.2017**
(21) Application number: 13755423.4
(22) Date of filing: 01.03.2013
(51) Int. Cl.: C02F 3/08

(54) **ROTATING BIOLOGICAL CONTACTOR APPARATUS&METHOD**
BIOLOGISCHE DREHSCHÜTZVORRICHTUNG UND VERFAHREN
APPAREIL ET PROCÉDÉ DE DISQUES BIOLOGIQUES

(30) Priority: 01.03.2012 US 201213409248
(43) Date of publication of application: 07.01.2015
(73) Proprietor: Biomass Technologies, LLC, Farmington, Michigan 48336 (US)
(72) Inventor: BAXI, Indra R., Troy, Michigan 48098 (US)
(74) Representative: Pouillot, Laurent Pierre Paul
(86) International application number: PCT/US2013/028577
(87) International publication number: WO 2013/130947

(56) References cited:
- US-A- 6 135 268
- US-A1- 2005 133 444
- US-A1- 2007 231 218
- US-A1- 2007 231 218
- US-A1- 2007 231 219
- US-A1- 2009 215 142
- US-A1- 2010 328 848
- US-B2- 7 156 986
- US-B2- 7 879 232
- CORTEZ S ET AL: "Rotating biological contactors: a review on main factors affecting performance", RE/VIEWS IN ENVIRONMENTAL SCIENCE & BIO/TECHNOLOGY, KLUWER ACADEMIC PUBLISHERS, DO, vol. 7, no. 2, 24 January 2008 (2008-01-24), pages 155-172, XP019614335, ISSN: 1572-9826

## Description

The disclosure relates generally to rotating biological contactors and methods of deploying them in a wastewater treatment facility.

### BACKGROUND

Conventionally, raw sewage enters a wastewater treatment facility through an inlet pipe. An equalization tank or its equivalent may contain miscellaneous debris together with a sewage screen, grit chamber, and a waterwheel for transporting flow to a primary settling tank. The waterwheel may be driven by a shaft that is coupled to a rotating biological contactor ("RBC").

The RBC typically has one or more banks of circular media ("disks") that are supported by the shaft. Banks of disks are then rotated by the shaft, which may also be turned by an electric motor. As the media rotate into and out of the wastewater, microorganisms attach themselves to the media. Such microorganisms proliferate when exposed to, for example, ambient oxygen. Often, a system's capacity to treat wastewater is a function of the surface area of reaction products ("biomass") thereby formed. As used herein, the term "biomass" means any organic source of energy that is renewable. Typically, contaminates contained in the wastewater include organic compounds such as hydrogen, carbon and oxygen that combine to form numerous other compounds. When this occurs over a large area, the weight of the dead microorganism is supported on the media surface area. Then an excessive build up will detach and fall. The microorganisms that consume the most common contaminates attach themselves to the media before multiplying to form a biomass in the form of a film.

Continuous rotation of disks in an RBC system provides the aeration and mixing necessary for treating wastewater. The effectiveness of the treatment and efficiency of output in part depends on oxygen transference. From the atmosphere, oxygen may be transferred by (1) absorption through a liquid film that flows over a disk surface; (2) direct oxygen transfer at an air/reactor liquid interface through turbulence created by rotating disks; and (3) direct oxygen absorption by microorganisms when exposed to the air.

A discussion of related technology is found in S. Cortez et al., "ROTATING BIOLOGICAL CONTACTORS: A REVIEW OF MAIN FACTORS AFFECTING PERFORMANCE", Rev. Environ. Sci. Biotechnol. 7:155-172 (2008), which is incorporated herein by reference.

A flexible disk will not be straight during assembly and is unable to maintain a parallel relationship with adjacent disks. This creates an uneven distance between various surfaces, and microorganisms will be prone to bridge between pins or adjacent surfaces. This will cause the media bank or circular media to require a higher torque for rotation. This is undesirable because the system's useful life will be reduced.

In some cases, an RBC may have multiple stages ("media assemblies").

Traditionally, in a first stage, the media surface area is presented to incoming wastewater, including microorganisms that naturally occur therein. As the disks rotate, the biofilm is formed on their surfaces. The biofilm metabolizes organic materials contained in the wastewater. In aerobic processes, rotating media promote oxygen transfer and maintain the biomass. Rotation also creates turbulence and enables excess solids to be removed or sloughed off from the media.

The microorganisms in typical wastewater normally form a microbial biofilm that grows over carrier material which is deployed in the disk bank(s) of the RBC. The media rotate at a speed of, for example, 1 to 5 RPM over a nearly stagnant bulk of wastewater and air. In operation, the film grows typically to a thickness of about 1 - 4 mm. When this occurs, the microorganisms that were the first to attach to the media die because no nutrient or oxygen can reach them. When this occurs over a large enough the biomass detaches itself from the media and sloughs off.

Media in use today typically include nested planar surfaces that are either flat or folded. They may, for example, be made of a mesh or a solid sheet. In known media assemblies, there is often a separation between adjacent disks. Extending from one side of conventional disks are projections that further engage the biomass. Both the flat and the folded types of media are spaced to provide a

A discussion of related technology is found in S. Cortez et al., "ROTATING BIOLOGICAL CONTACTORS: A REVIEW OF MAIN FACTORS AFFECTING PERFORMANCE", Rev. Environ. Sci. Biotechnol. 7:155-172 (2008). A flexible disk will not be straight during assembly and is unable to maintain a parallel relationship with adjacent disks. This creates an uneven distance between various surfaces, and microorganisms will be prone to bridge between pins or adjacent surfaces. This will cause the media bank or circular media to require a higher torque for rotation. This is undesirable because the system's useful life will be reduced.

The document US2007231218 describes a wastewater treatment system that utilizes an equalization tank to store hydraulic surge flows from a collection system and uses a waterwheel to transfer a maximum flow equal to plant design flow to the downstream treatment systems. A transfer system includes a waterwheel that transfers the wastewater into the primary settling tank e.g., via one or more fluid containers like a tiltable bucket or the like. The waterwheel is operable to pick up an amount of wastewater from the equalization tank and deposit it into the primary settling tank.The intended speed of rotation of the waterwheel being served, to ensure that hydraulic overload of the system will not occur. At a fourth stage, a waterwheel recirculates plant design flow back into the primary settling tank. This relatively clean, oxygen-rich treated wastewater dilutes the fluid in the primary settling tank, and also adds active microorganisms and oxygen to aid the activated sludge activity occurring in the primary settling tank 200. This recirculation can also be continuously feeding the accumulated sludge, in the primary settling tank 200, to the biomass on the RBC system 300 media. This enables the plant to operate in conditions of very low flow or no flow for up to six months.

Further documents are cited as background, i.e. US2010328848, US6135268 and US2009215142.

In some cases, an RBC may have multiple stages ("media assemblies").

Traditionally, in a first stage, the media surface area is presented to incoming wastewater, including microorganisms that naturally occur therein. As the disks rotate, the biofilm is formed on their surfaces. The biofilm metabolizes organic materials contained in the wastewater. In aerobic processes, rotating media promote oxygen transfer and maintain the biomass. Rotation also creates turbulence and enables excess solids to be removed or sloughed off from the media.

The microorganisms in typical wastewater normally form a microbial biofilm that grows over carrier material which is deployed in the disk bank(s) of the RBC. The media rotate at a speed of, for example, 1 to 5 RPM over a nearly stagnant bulk of wastewater and air. In operation, the film grows typically to a thickness of about 1 - 4 mm. When this occurs, the microorganisms that were the first to attach to the media die because no nutrient or oxygen can reach them. When this occurs over a large enough the biomass detaches itself from the media and sloughs off.

Media in use today typically include nested planar surfaces that are either flat or folded. They may, for example, be made of a mesh or a solid sheet. In known media assemblies, there is often a separation between adjacent disks. Extending from one side of conventional disks, are projections that further engage the biomass. Both the flat and the folded types of media are spaced to provide a path that allows the sloughed biomass (i.e., biomass that has become detached from the media) to be removed from the media. This prevents plugging of the system which would reduce the media surface area exposed to contaminates in the wastewater and thus reduce the capacity of the system. Following traditional approaches, biomass interposed between adjacent disks may result in uneven spacing and the distortion of media surfaces. Such uneven spacing may produce clogging. In turn, this reduces the effectiveness of treatment and may weaken the disks that form the media.

Some media have variously shaped holes or open triangles that increase the surface area. However it is difficult using traditional methods to make a large section (e.g., 3048mm - 10 feet - in diameter, with 1 feet corresponding to 304,8mm) and keep a flexible disk straight during assembly. Such components become expensive to produce, and generally have a shorter running life due to cracking and breaking.

In some prior art approaches, media growth of the biomass on some sections produces non uniform loading. This causes the media to exert a rotational torque that is higher than may be designed or desirable. Fracture of the shaft that carries the disk media often results and/or the media themselves may fracture. Moreover, prior art media often do not provide additional oxygen that is needed for biomass growth and survival to reduce sludge. Thus, prior art rotating media banks tend to collapse due to an imbalance of heavy buildup.

There are other disadvantages of conventional RBCs. From a process performance perspective, conventional RBCs have a limited oxygenation capacity. Because slowly rotating media may have about forty percent of their surface area immersed in the wastewater, a "dead zone" may exist near the center shaft. Solids accumulate near the center shaft because radial velocities are minimal, and the area is subject to little water scouring. Hence, traditional RBCs often fail to perform to the specifications of the original design. As noted above, the media have experienced problems of collapsing due to the weight of the solids build-up and retention. Additionally, many problems have been realized in the failure of the plastic media sheets to bond to the center shaft with which they rotate. Shaft problems have been experienced where the shaft shears under the load of excessive solids retained by the media. Because of this anticipated excessive loading, bearing problems have also been realized.

The document US 7,156,986 discloses a pin and cone approach to spacing the media. However conical sections with long pins are difficult to manufacture economically. They are more rigid and can break (fail) during assembly. The document US 7,879,232 discloses double-sided self-cleansing media. It is cumbersome to form a circular section. Cutting the periphery into a circular section can be challenging. That patent discloses a solid pin and solid cone approach to provide the equal spacing of media disk bank. However a solid conical section with a long pin tends to warp and a perpendicular relation is not maintained. This creates a mismatch and uneven gap between adjacent surfaces in the disk bank. Also, two media cannot easily be held together during assembly.

It would be desirable to augment the capacity of such treatment facilities without excessive cost and without impairing the effluent quality.

In light of such previous approaches, needs exist for improved disk media with balanced rotational motion in combination with a control system with a speed reducer and/or an inverter drive. As used herein, an "inverter (or variable-frequency) drive" is a system for controlling the rotational speed of an alternating current (AC) electric motor by controlling the frequency of the electrical power supplied to the motor. http://en.wikipedia.org/wiki/Variable-frequency drive.

Improved disk media include concentric segmented disk sections that facilitate disk assembly. Also, turbulating posts extend from opposite sides of disks, thereby offering a more effective surface area. Balanced rotational motion is in part enabled by the control system and an inverter drive that reverses the direction of rotation when certain conditions are met.

The control system and inverter drive (collectively herein, "system") permit automated operation at remote installation sites if desired without human intervention. The system influences angular acceleration, steady state speed, angular deceleration and direction of rotation when certain operational conditions are met. The system is programmed to avoid an overloaded accretion of biomass on the disk assemblies by monitoring current flow (I) or power (W). If the current flow required to drive the motor, the reducing gearbox and thus rotate the shaft exceeds a given level, the current is reduced, rotational speed(s) of the shaft diminishes and its direction of rotation can be reversed if desired after a period at rest. Also the system creates a slow buildup in speed as the shaft's rotational speed rises from zero to a desired angular speed. If desired, the control system can communicate wirelessly with a remote monitoring station which can alert a human operator should an abnormal operating condition exist or be impending.

Methods of fastening disks together are disclosed for long term reliable operation. The media do not require any machining, metal reinforcement or additional non-metallic components to assemble a full circle, as the inventive snap fit device is self-supporting and forms complete circles of various diameters.

Balanced rotation is also established in relation to a central shaft and motor with a gearbox and inverter drive that supports the media, accelerates the media, maintains a steady state of rotational speed, decelerates the media, stops it, allows it to remain stationary for a pre-established time (T), and if desired reverses the direction of rotation.

Preferably, at least some of the disks have a racetrack-like center mounting hole through which the central shaft is received. The hole has two curved sections that extend from two flat sections which desirably lie to each other. The non-circular mounting hole eliminates a fastening & holding mechanism otherwise required to keep the media securely in position with respect to the shaft. Slippage is eliminated. As the shaft rotates speeds up, or slows down, so also does the disk assembly.

The disclosure utilizes precisely designed circular pins ("turbulating posts"), e.g. in large numbers. Tall circular pins, optionally with a hollow inner core that channels an irrigating flow of wastewater, augment the effective
surface area. As a result, the film (scum) is broken and more wastewater may flow readily to the next media bank or stage.

A multi-height feature of the media allows the biomass to accrete during rotation. This also facilitates self-cleaning and increased oxygenation. Moreover, the hollow pin media carry a flow of wastewater that encourages the heavy build up of biomass to fall away from the media into an underlying tank.

Near the center of a disk, a flat planar surface without protruding posts is provided. Like a clearing in a forest, the flat planar surface allows more oxygen to be stored close to the axis of shaft rotation, where little if any agitation would occur. This eliminates or minimizes the dead zone. Surrounding the flat surface, for example between about 101,6mm to 203,2mm (4 to 8 inches, with 1 inch corresponding to 25,4mm) from the shaft center, is a cluster of connecting pins.

The media can be made from such materials as UV stabilized filled polyethylene or UV stabilized filled and unfilled polypropylene and high density polyethylene.

In one embodiment, there is a snap fitting engagement of media segments to hold segments in place that are associated with a particular disk. First (e.g., male) and second (e.g., female) snap-fitting features link adjacent segments in a disk.

Fluid influent is received by a semi cylindrical tank that is provided beneath an assembly of disks. It is preferably made of fiberglass by a vacuum form process, or by a fiber glass layup process, or high density polyethylene rotational molding, or a sheet forming process. The tank is provided with one or more sludge trap doors near its lowest point or radius, that operate automatically when the load weight of the dead biomass exceed the spring tension capacity of the flapper (trap door)or hinge load holding pressure. The dead weight will then fall into the tank beneath the circular tank where the media is operating. Alternatively, the tank could be made of a metal or metallic alloy. If desired, the tank can be provided with one or more trap doors near its lowest point, which when opened will allow the build-up of solid or semi-solid waste to be flushed from the tank.

The formed circular disks are precisely spaced apart to enhance movement of wastewater and biomass holding, plus allow the biomass to be dumped or slough off once a certain weight is built up. Thus they are not subject to shaft breakage in normal use. The incorporation of precisely designed pins and spacing around and apart from the shaft allows biomass to slough off readily and eliminates a dead zone proximate the center of rotation, while allowing oxygen to penetrate close to the inner center of the media, outside the central shaft.

The media are spaced along a center shaft, which is supported with durable bearing supports. End plates are associated with media assemblies. The end plates secure member disks in the assembly and define holes through which load-bearing reinforcing rods or tubes for fluid flow extend. Optionally the rods, the tubes, or both may support paddles, buckets, hollow pipe fittings, hollow couplings or T-shaped scoops to transfer liquid at an end plate which secures disks in a given media assembly together. As the central shaft rotates, so also do the buckets or scoops. This motion captures ambient air and submerges it as their rotational path continues below the surface of the wastewater.

The inventive media have several characteristics that offer improved performance over conventional sheet media. In alternative inventive embodiments, there are octagonal wheels and circular structures that are non-corrosive due to their construction materials. One embodiment (mentioned earlier) has paddles ("buckets", "cups" or "scoops") or T-shaped tube endings that are optionally adjustable and positioned at the ends of spokes of the wheels. The paddles allow the media to trap air as the paddles enter the fluid during their rotational path. Somewhere toward the bottom of their rotational path, the paddles release the trapped air, which promotes oxygenation of the wastewater.

While the media continue on their rotational path in an upward direction, their pin-shaped surfaces lift the adherent biomass and associated liquid above the mean level of the wastewater. At some point toward the apex of their rotational path, the large and small circular pins allow at least some of the biomass to form and fall there between, thus promoting efficient aeration.

In alternative embodiments, the media are spaced to avoid collapse, using light flexible pins and snap studs. Optionally, the disclosed media pins are hollow axially, thereby allowing water to pass through small holes that create a balanced rotary motion and provide rotational momentum. and improved circular media with various diameters.

A further object is to provide apertures in end plates that sandwich the disk media through which mounting rods or tubes may extend parallel to the main shaft to increase load bearing capacity and transfer loads from the media pins to the end plates.

Another object is to provide improved media pins to increase the surface area, reduce weight of disk banks and allow hanging biomass to fall into a collection tank.

Yet another object is to provide an improved pin design to increase surface area and (optionally) wastewater flow through axially oriented passages.

A still further object is to provide pins on both sides of a disk that connect a small pin to a large pin to form a fixed distance between each disk.

Another object is to provide side-mounted holding plates for securing media banks. Preferably, the plates are made from a material like polypropylene or high density polyethylene (HDPE) or aluminum or sheet metal.

A further object is to provide snap fit engagement between adjacent segments in a disk and scoops to enhance air supply to the biomass.

A still yet further object is to provide disks with optionally removable segments that can replace existing media, are simple in construction, economical to manufacture and efficient to use.

With the above and other objects in view, the disclosure includes a combination and arrangement of parts hereinafter more fully described, illustrated in the accompanying drawings.

Further areas of applicability of the present invention will become apparent from the detailed description provided hereinafter. It should be understood that the detailed description and specific examples, while indicating the preferred embodiment of the invention, are intended for purposes of illustration only. A wastewater treatment facility as per the invention is defined by claim 1. Claim 13 defines a method as per the invention.

### BRIEF DESCRIPTION OF THE DRAWINGS

The present disclosure will become more fully understood from the detailed description and the accompanying drawings, wherein:
FIGURE 1 is a schematic view of a wastewater treatment process;
FIGURE 2 is a partially sectioned, perspective view of a rotating biological contactor ("RBC") system, in accordance with one embodiment of the present disclosure;
FIGURE 3 is a top view thereof;
FIGURE 3a enlarges a portion of it;
FIGURE 4 is a left side elevational view thereof;
FIGURE 5 is a side view of a multi-segmented disk;
FIGURE 6 is a quartering perspective view of two adjoining segments in a multi-segmented disk assembly, showing snap fit features therebetween for securing projecting elements of adjacent disk segments in place, in accordance with one embodiment of the present disclosure;
FIGURE 7 is a quartering perspective view of three juxtaposed segments before being snap-fitted together;
FIGURE 8 is a sectional view of three connected disks showing an optional through-bore (water passage) that extends through interfitted connecting elements;
FIGURE 8a is an enlargement of a portion of FIGURE 8;
FIGURE 9 illustrates a shaft-engaging aperture in a disk with a flattened area that surrounds the aperture;
FIGURE 9a is an alternate embodiment of the flattened area depicted in FIGURE 9;
FIGURE 9b depicts a curved (bulged) disk topography in the innermost monolithic ring of a disk; and
FIGURE 10 is a flowchart that illustrates various control aspects of initializing and operating the disclosed wastewater treatment process.

The same reference numerals refer to the same parts in the various Figures.

### DETAILED DESCRIPTION

The disclosure relates to new and improved control systems and media for use in conjunction with a rotating biological contactor ("RBC") in a wastewater treatment facility.

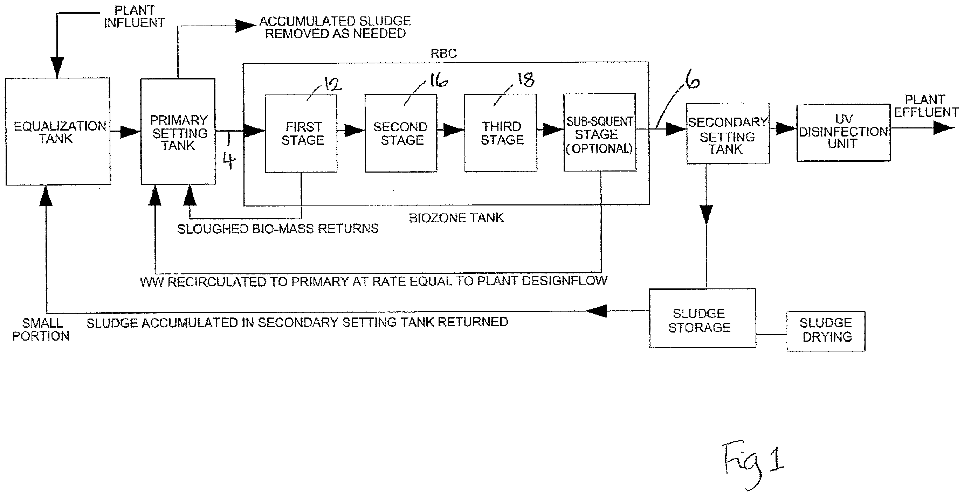

To put the inventive RBC in context, a brief discussion now ensues about an exemplary wastewater treatment system, in which one embodiment of the disclosed RBC lies. In one form, a wastewater system (Figure 1) has an equalization tank into which raw sewage including contaminants enters through an inlet pipe. Optionally, the equalization tank may include a mechanical sewage screen and a grit chamber, plus a waterwheel for transferring flow to a primary settling tank. In some cases, the waterwheel is driven by a linkage that is coupled to one end of an RBC shaft. The primary settling tank and a secondary settling tank located downstream from the RBC both provide storage for accumulated sludge. In a facility, there may be multiple RBC's that are operated in series or in parallel.

As depicted in Figures 1-4, the RBC has in one embodiment three stages, although the invention is not so limited. If desired, the direction of rotation can be reversed when certain conditions are met.

The control system, speed-reducing gear box and inverter drive (collectively herein, "system") permit automated operation at remote installation sites if desired without human intervention. If desired, one alternate embodiment uses a wired or wireless communication link to a monitoring station to which signals are sent that are indicative of an operating state of the RBC. In response, the remotely located operator may send signals back to the RBC by which its motion or lack thereof can be influenced.

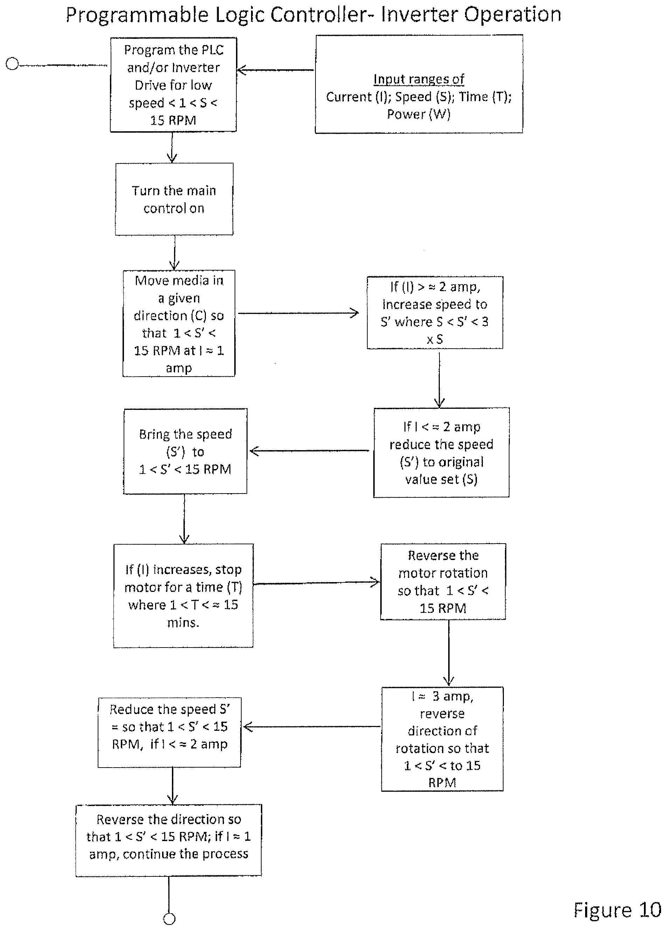

The system influences angular acceleration, steady state speed(S), angular deceleration and direction of rotation when certain operational conditions are met. A representative logic flow diagram appears in Figure 10. The system is programmed to avoid an overloaded accretion of biomass on the disk assemblies by monitoring current flow (I) or power (W). If the current flow required to drive the motor and the reducing gearbox (and thus rotate the shaft) exceeds a given amount (e.g., 2 amps), the current is reduced. Then the rotational speed of the shaft diminishes and its direction of rotation can be reversed if desired after a period at rest. Also the system creates a slow buildup in speed as the shaft's rotational speed rises from zero to a desired angular speed.

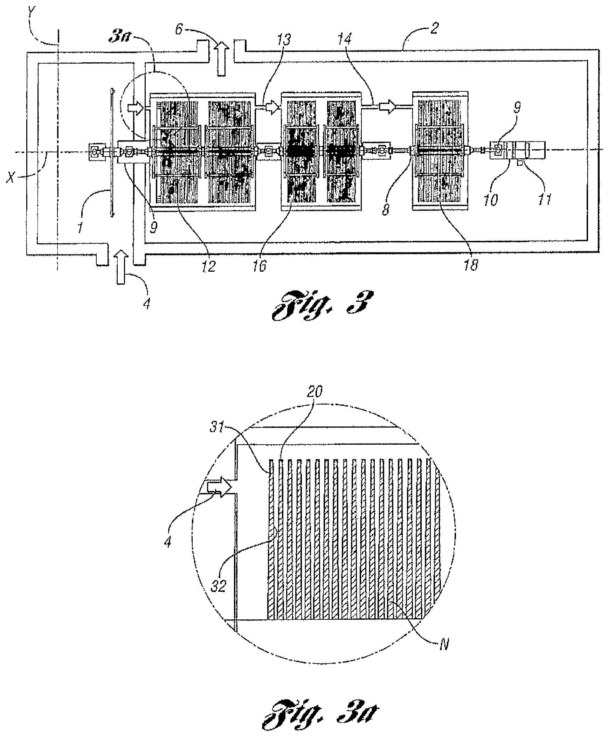

In accordance with a first embodiment of the present invention, an RBC system 1 is provided in a wastewater treatment facility. One embodiment has:
a. an elongate tank 2 with a longtitudinal axis (X-X) and a lateral axis (Y-Y, Figure 3);
b. a rotatable shaft 8 that lies substantially parallel with the longitudinal axis (X-X);
c. one or more stages 12, 16, 18 for progressively purifying incoming wastewater, each stage being oriented transversely to the shaft 8 in approximate parallel relationship with the lateral axis (Y-Y). Each stage has one or more disk assemblies.

Each disk assembly has a number of disks 20 (Figure 3a). The disks in each stage are precisely spaced in relation to the longitudinal (X_X) axis. The spacing is equal or different for all stages. When wastewater passes from stage to stage, it undergoes a progressively increasing degree of treatment by a varied degree of oxygen to which the different biological cultures are exposed in the progressive stages. The first stage typically receives the highest concentration of organic matter and develops cultures of mixed heterotrophic bacteria. The second stage usually has a lower concentration of organics. In the third stage, the concentration of organics decreases further because the nitrifying bacteria begin to appear with various types of higher life forms such as protozoa, rotifers and other forms. If there is an overload of concentration, the initial section of media will allow organic growth to be stripped off and thus the load decreases. The stripped biomass and bioflocculated suspended matter falls into the tank in which the media rotate, as discussed below.

End plates are associated with and effectively sandwich the media assemblies. The end plates secure member disks in the assembly and define holes through which load-bearing reinforcing rods or tubes for fluid flow extend.

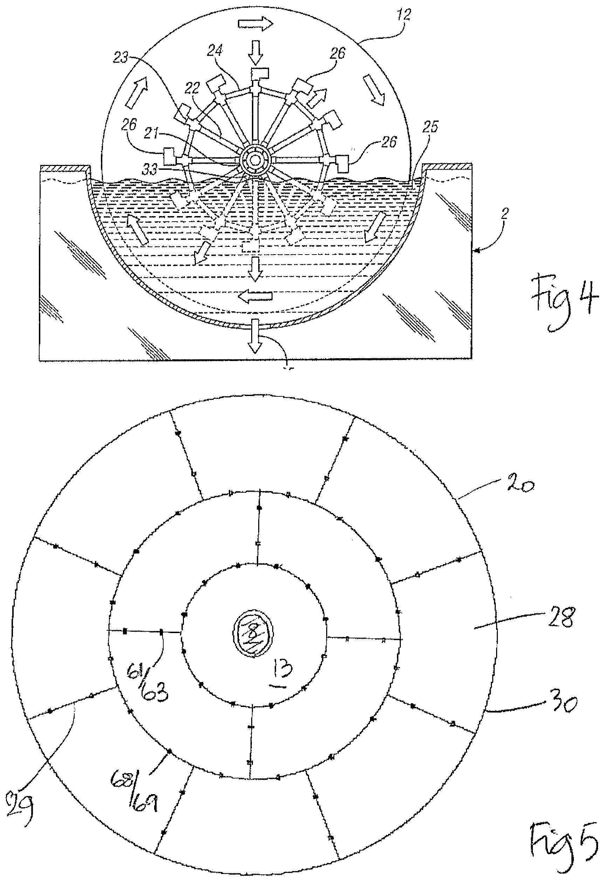

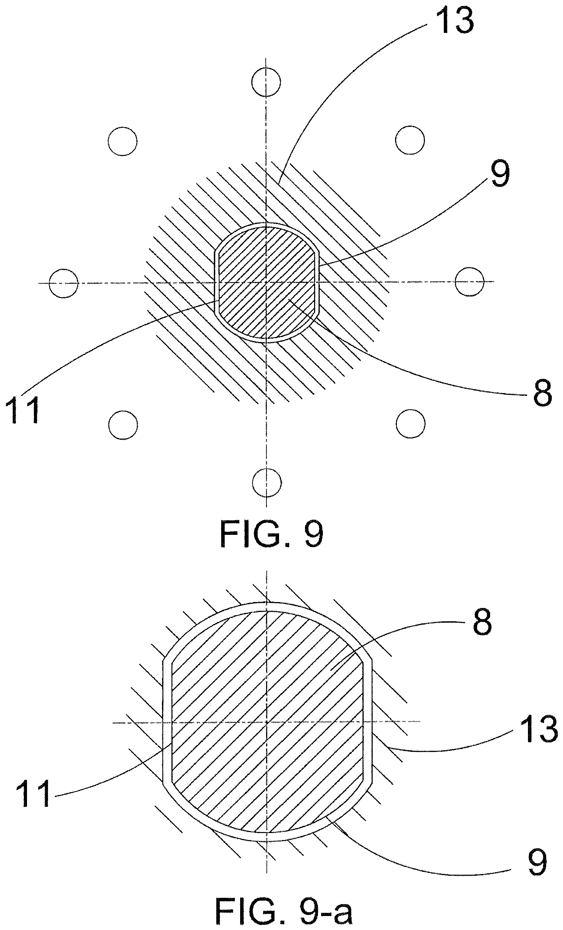

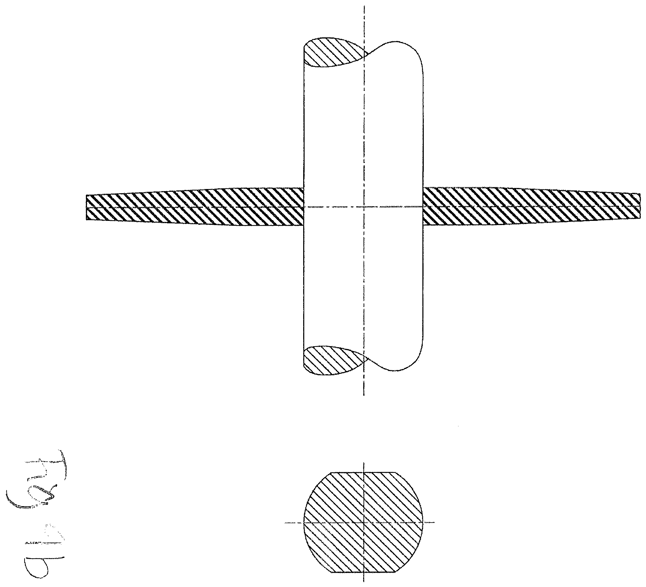

Each disk 20 has a centrally located, non-circular - preferably racetrack-shaped -- aperture 9 (Figures 5, 9 & 9a) that receives and engages with a rotating shaft 8. Preferably the shaft 8 has flattened longitudinal surfaces or splines 11 that register with the racetrack-shaped aperture 9. In this way, slippage is avoided. As used herein, "racetrack" means a shape defined by two opposing straight edges that are connected by a pair of facing curved sections. The term also includes other apertures whose shape is designed for registration with flattened axially extending faces on the shaft, e.g., hexagonal or other polygonal, etc. to avoid slippage and ensure that the shaft and associated media move in unison.

In one embodiment, the spacing between adjacent disks 20 in stages 1 - 3 range respectively between 6 mm- 20 mm, 4 mm - 12 mm and 1 mm - 5 mm with or without loading in operation.

Surrounding the centrally located aperture 9 is a planar surface (like a clearing in a forest) that may be crescent-shaped or annular (Figures 9 & 9a) which lacks turbulating posts 33. Biomass may readily slough off from posts surrounding the planar surfaces and drain across the planar surface before migrating downwardly towards the bottom of semi-cylindrical tanks that lie below the rotating media. The posts 33 extend from the front and back sides of the disks 20. In one example, the annular planar surface 13 is bounded by multiple concentric rings of segments 28 (Figure 5). At least some of the segments 28 have faces exposed to air and wastewater that are (but need not be) imperforate. Each segment 28 that lies outside the annular planar surface 13 has:
a. two generally radially extending edges 29; and
b. two circumferential edges 30 that extend between the two radially extending edges 29.

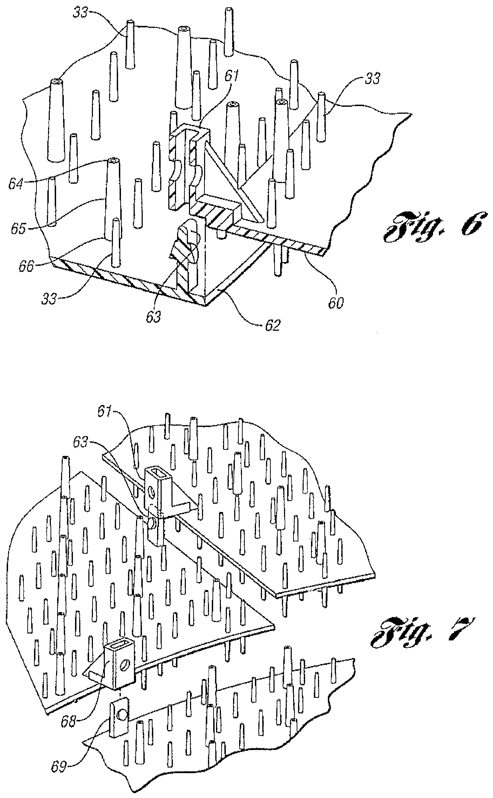

At least some of the disks 20 each have
a. a front face 31 and a back face 32 (Figure 3a);
b. a plurality of turbulating posts 33 (Figures 6-8) extending from the front 31 and back 32 faces for stirring wastewater and offering sites for adherence of biomass suspended in the wastewater;
c. a plurality of tubular extensions 64 from the faces 31, 32 through which wastewater may flow. In some embodiments the extensions optionally are tubular or frusto-conical so as to define a flow channel 74 between tubular extensions 64 from and through opposing faces 31, 32 of a disk 20. The tubular extensions 64 have tips and a height of the tip that exceed the height of the posts 33 so that adjacent disks in an assembly of a stage 12, 16, 18 are connected and spaced apart by a mating relationship between tips of facing extensions 64 and by the rotatable shaft 8; and
d. first (e.g., male) 63 and second (e.g., second) 61 engagement features ("snap-fit connections") also extending from edge regions of one of the front 31 and back 32 surfaces of a disk 20 that enable adjacent segments 28 of a disk 20 to be joined. Optionally, the first 63 and second 61 engagement features can be non-destructively separated after engagement to facilitate field repair and replacement of a segment 28 of a disk 20.

In preferred embodiments, any of the disks 20 may be made of a thermoplastic material. Their diameter can be sized up to about 3657,6mm - 4572mm (12 - 15 feet). Other embodiments may assume different diameters, such as but not limited to 1828,8mm and 914,4mm (6 and 3 feet).

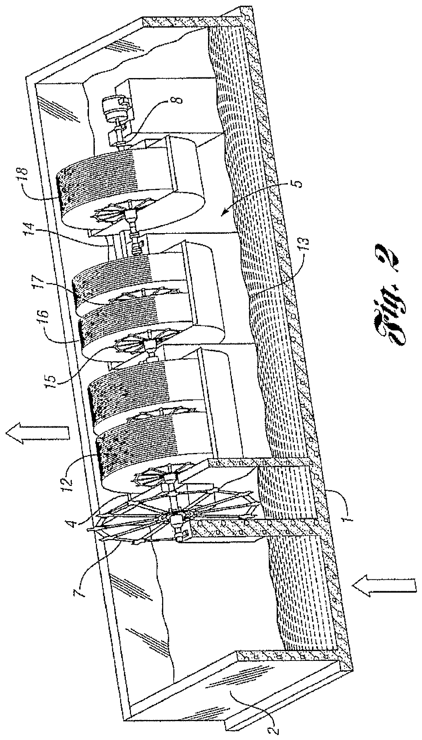

In one embodiment (Figure 2), the three stages 12, 16, 18 of media are presented. This provides an efficient way to clean wastewater before an operator disposes of an effluent in a river or pond or for irrigation.

It will be appreciated that the number of stages 12, 16, 18 is variable. In Figures 2 - 3, only three are depicted. It is understood that additional (or fewer) stages may be deployed if desired. Figures 2 - 3 depict two disk assemblies in the first stage 12, two disk assemblies in the second stage 16, and only one disk assembly 18 in the third stage or in a fourth stage (not depicted). The number of disks in an assembly may lie between two and about 99.

Turning now to Figure 5, an exemplary disk 20 may be formed from the annular planar surface 13 and multiple concentric rings 34 of segments 28 are detachably attached to and around the outer periphery of the annular planar surface 13. In Figure 5, for example, there are two rings that circumscribe the annular planar surface 13. Each ring 34 has a number of segments 28. The annular planar surface 13 has a bore or centrally located shaped aperture 9 with flats 11 that receive the rotating shaft 8 which has longitudinally extending flattened surfaces.

In an intermediate ring 34 (in the depicted embodiment) four (for example) segments are joined to the annular planar surface 13 and the outer ring segments (eight in number). In one embodiment, one or more disks 20 lie in a plane or planes with a topography that is substantially flat or convex (bulges in a central region around the centrally located aperture 9) with an axis of symmetry that is parallel to the longitudinal axis Y-Y. Preferably, the curved topography lies mostly in the annular planar surface 13, adjacent to the shaft 8.

Optionally, the turbulating posts 33 may droop or be bent downwardly in response to biomass weight so that the biomass may slough off the disks 20. In one embodiment the posts 33 are spaced apart by a distance of between 3 mm and 25 mm. Biological growth forms a film around the surfaces of the posts 33 and the plane of the disks 20. Alternatively, one or more of the turbulating posts 33 may be formed as a fin-like projection that may move in relation to the wastewater in a knife-like manner. If a blunt edge of the knife-like post embodiment is presented to the wastewater, other things being equal, more turbulence will result. Conversely, if a sharper edge surface of the knife is positioned at the leading edge of the post as it moves in relation to ambient wastewater, the post will cleave through the wastewater, leave little turbulence in its wake, and be expected to have a longer useful life.

Turning now primarily to Figures 3-4, the RBC system 1 includes a wastewater inlet 4 and fluid outlet 6. In one embodiment, wastewater flows into a semi-cylindrical trough 25. Rotation of the RBC induces the wheel 7 and the scoops 26 to add air to a stage. A dead biomass dump 35 is positioned below one or more stages 12, 16, 18 of the RBC. The stripped biomass and bioflocculated suspended matter fall into the trough 25 that communicates with the dump through a spring-loaded or load control flapper that opens.

The wastewater mixing and oxidation wheel 7, which may or may not be octagonal, is mounted on the rotatable shaft 8 and has one or more cups or T-shaped fittings 26 that scoop the wastewater to promote agitation and oxygenation. It will be appreciated that in Figure 4 only eight such scoops 26 are shown. Alternatively, more or fewer scoops 26 could be provided on the wheel 7. If desired, the inclination of the scoops 26 in relation to the radially extending spokes of the wheel can be changed so as to influence when and where in their rotational path the air pockets retained in a scoop escape from the scoops as they pass through the wastewater. The T-shaped fittings 26 are oriented so that they effectively scoop and discharge when the direction of rotation is reversed.

Upon emerging from the fluid outlet 6 of the RBC, the fluid may pass to a secondary settling tank, filter tank, and perhaps to an ultraviolet disinfection unit for deducting clean water to a river, pond or underground.

Each stage 12, 16, 18 optionally has different surface areas for processing waste. Generally, the first stage 12 is coarse, a second stage 16 is medium and a third stage 18 includes a fine filter. The surface area becomes more dense as the waste passes through the stages from first to second to third stage.

The disclosed RBC offers a significant increase in the surface area of media banks exposed to the wastewater as compared to conventional media stacked systems. The disclosure provides an overall surface area exposure of 100 to 135 square feet per cubic feet (with 1 feet corresponding to 0,3048m) of media in its initial stage. Turbulating posts and interconnecting tubes offer a high surface area for the growth of biomass, which is 3.5 to 5 times more than the surface area of conventional plastic corrugated, formed media, screen or flat media.

In one example, a disk having an outside diameter of 3657mm (12 feet, with 1 feet corresponding to 304,8mm) was constricted from an annular (innermost) planar surface 13, intermediate, and outer rings of segments. Respectively (as depicted in Figure 5) there were 4 and 8 segments in the intermediate and outer rings. Extending from the annular planar surface 13, there were 100,000 - 240,000 turbulating posts and between 400 - 900 mating extensions. In the intermediate ring, there were between 120,000 - 300,000 turbulating posts and 500 - 900 mating extensions. In the outer ring, there were 160,000 - 320,000 turbulating posts and 600 - 1,100 mating extensions.

In one exemplary disk assembly the average spacing between adjacent disks was about 44,45mm (1.75 inches, with 1 inch corresponding to 25,4mm). It will be appreciated that the spacing between the turbulating posts is selected so as to increase the surface area available for biomass attachment while minimizing any tendency of the biomass to bridge between adjacent posts.

An illustrative modus operandi is depicted in Figure 10. It will be understood that the values of speed (S), amperage (I) and time (T) are for illustrative purposes only and that the invention is not so limited. Programming the system involves initialization and operational stages. Additionally or alternatively, power (W) can be monitored, where W = I x V and V = 120, 240 or 460 volts.

In the initialization stage, ranges of allowable values for S, I and T for example are specified, together with critical values of for example I. In the operational stage, instructions are given via a PLC and/or an inverter drive and user interface that when for instance a critical value (e.g, I > 2 amps) is reached, speed (S) must be reduced by lowering the current I to avoid an overload condition. Continuous monitoring by a control panel of current (I) will indicate when the mechanical load on the disk assemblies has lessened and thus when it will be acceptable to increase throughput by quickening the rotation speed (S) by raising the current level (I). Other variables include a vector that specifies the direction of rotation (R) and the time (T) of a phase of movement of the RBC (e.g., at rest for at time (T) = 120 minutes; or movement clockwise (R = 1 for T = 24 hours).

In one embodiment, a control system is provided for remotely monitoring the programmable logic controller through the worldwide web so that suppliers and customers may control and change operating parameters for efficient and reliable operation of the facility.

Algae growth on the media is prevented, since the level of oxygen is influenced by media rotation speed which is adjusted by the control system

One major advantage of this process is that it is simple and energy-efficient. The installation is cost competitive with other systems. However, the major cost advantages lie in its low energy requirements during operation. Output efficiency may be in the range of 3 ½ to 5 times that of conventional flat plastic media. The biological effectiveness of the process makes it attractive compared to current technology that does not optimize bacteria growth, nor utilize the biomass effectively.

Because individual segments of a disk can be mated by use of the snap fit connections 68, 69 (Figures 6 - 7), subassembly and field replacements are quite straight-forward because the segments are light in weight, unlike prior art assembly steps. For example, USPN 4,549,962 discloses large subassemblies that are put together in a factory and then transported to the field for installation at the point of use. In some circumstances, such practices may damage the assembled disks in transit or during installation and otherwise be cumbersome to manipulate.

Figures 6 - 7 depict the snap fit cooperative connection 68, 69 of adjacent segments in a disk in more detail. It will be appreciated that in some embodiments, the second connection 68 may include a tapered channel so that progressive insertion of the first connector 69 may be made by an interference fit. Optionally, a lug or flange may extend from either the first or the second member and be received in the other member so that when the insertion step is complete, a positive engagement ("snap-fit") or registration action occurs.

By following the practices disclosed herein, assembly of the disks 20 is accomplished, if necessary in the field, without deploying any metal parts. This represents an advantage over several prior art practices in which any magnetic particles in wastewater may be attracted to conventional RBC media. Absent magnetic attraction, biomass can be easily detached from the inventive RBC media without reducing the productive surface area.

Thus, the inventive media offer a strong self-supporting RBC in which a given disk 20 is formed by, for example, one or more concentric rings 34 of segments 28 that are connected by snap fitting features 61, 63 which are positioned at spaced apart locations (e.g. 2 per edge) on the edge regions of disk segments.

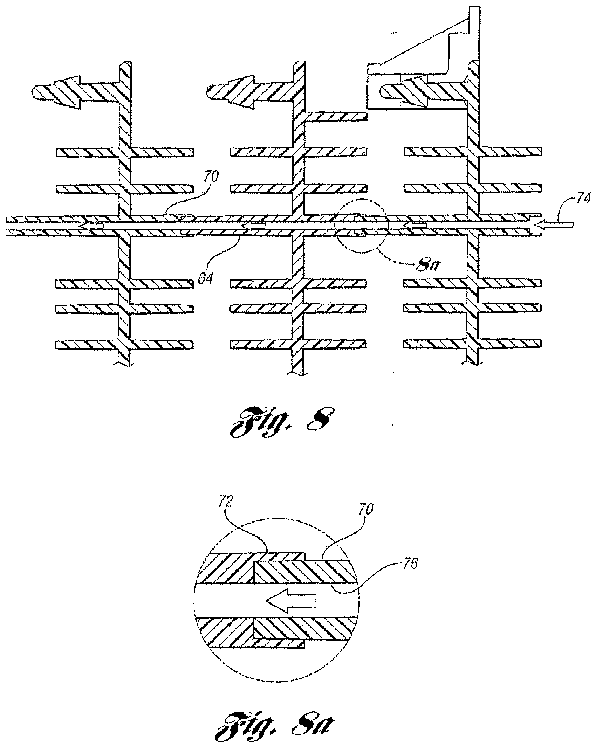

It will be appreciated that the optional hollow tubes 70 (Figures 8, 8a) allow wastewater to be transmitted therethrough. At the ends of a stage, if desired jets of water from for example a hose may slough off the dead biomass. This tends to avoid excessive buildup and promote circulation, especially in the annular planar surface 13 adjacent to the center of a disk 20 in proximity to the rotating shaft 8.

Because each assembly tends to be somewhat rigid in its structure, the disclosed RBC supports varying weights of biological buildups. This tends to prolong the useful life of the apparatus and reduce the incidence of shaft failure.

In one pilot test, 46 182 liters (12 200 gallons) per day of sewage were treated from an effluent sewer line and the treated effluent was returned into the wastewater treatment influent line. A series of experiments has demonstrated the effectiveness of the RBC technology which documents its low energy use, small footprint, high quality effluent, the transportability of the treatment technology, effectiveness through wide variations of inflow rate and viability through extended periods of minimal flows in compliance with all environmental regulations.

Influent wastewater was screened and allowed to settle. Fats, oils and greases and other floatables were collected before introducing the influent to the the RBC. In one series of tests, the shaft was rotated at 1 to 2 RPM (up to 15 RPM), and a layer of biological growth was observed in an amount of 2 to 4 mm in thickness that was rapidly established on the wetted surface of each disc.

After about three weeks of normal operation, a uniform biomass buildup was achieved. Periodic observations of various parameters were made and recorded. Those perimeters included:
1. BOD5 - the biochemical oxygen demand of wastewater during decomposition occurring over a 5-day period. This is a measure of the organic content of wastewater. Typically, the dissolved oxygen is consumed by biological processes, while breaking down organic matters;
2. TSS - Total Suspended Solids is a measure of the solids suspended in wastewater, effluent, or water bodies, as determined by tests for total suspended non-filterable solids.
3. Other - Observations were made of NH₃ and PO₄ levels.

Although the invention is not so limited, one suitable illustrative variable frequency drive is manufactured by ABB (ACS355). Experiments have been performed with a 1 HP AC motor operating at about 1800 RPM, 230/460 volts; PN Y364-MARA.

One attribute of the disclosed RBC system is that biofilm continuously grows and attaches to the three dimensional media surface. Sludge recycling may be unnecessary and can for example be used as a biofuel or fertilizer, thereby allowing the system to operate at a low cost.

It has been observed that activated sludge requires efficient settling. Previous approaches do not compensate adequately for hydraulic surges or organic shock loads. But the innovative RBC system overcomes the hydraulic surges and sudden shock loading due to its ability to adjust the loading electronically in response to load sensors.

Further, the disclosed system has three separators with three different heights to maintain a fixed distance between adjacent disks in case one fails:
- a hollow tall interlocking media pin;
- a male snap fit device post; and
- inner small pins;

**List of Reference Numerals**

| **Ref. No**. | **Component** |
|---|---|
| 1 | RBC system |
| 2 | Concrete or steel tank |
| 3 | Primary settling tank |
| 4 | Fluid inlet |
| 5 | Water |
| 6 | Processed water outlet |
| 7 | Wastewater mixing & oxidation wheel |
| 8 | Rotating shaft |
| 8a | Speed reducer gear box |
| 9 | Centrally located shaft-receiving aperture |
| 10 | Electric motor to rotate the media shaft |
| 11 | Flat |
| 11a | Power saver inverter drive |
| 12 | 1^{st} stage |
| 13 | Annular planar surface in disk |
| 13a | Fluid transfer pipe from 1 st stage to 2^{nd} stage |
| 14 | Fluid transfer pipe from 2^{nd} stage to 3^{rd} stage |
| 15 | Front side load transfer and assembly mechanism |
| 16 | 2^{nd} stage |
| 17 | Rear side load transfer and assembly mechanism |
| 18 | 3^{rd} stage |
| 19 | Secondary settling tank |
| 20 | Disk |
| 21 | Load transfer mechanism connector pin |
| 22 | Media load transfer tube section ("wheel spoke") |
| 23 | Load transfer shaft coupling |
| 25 | Effluent treatment tank |
| 26 | Media coupling water & air mixer ("scoop" or "cup") |
| 28 | Disk segment |
| 29 | Radial edge of segment |
| 30 | Arcuate or circumferential edge |
| 31 | Front face of disk |
| 32 | Back face of disk |
| 33 | Turbulating posts |
| 34 | Rings of segments |
| 35 | Dump |
| 36 | Trough |
| 60 | Disk thickness-1^{st} segment |
| 61 | Snap fit second (e.g., female) engagement feature |
| 62 | Disk thickness-2^{nd} segment |
| 63 | Snap fit first (e.g., male) engagement feature |
| 64 | Connecting member (tall pin) |
| 66 | Connecting member (tall pin) |
| 68 | Snap fit second (e.g., female) engagement feature |
| 69 | Snap fit first (e.g., male) engagement feature |
| 70 | Tall pin tip section |
| 72 | Receiving tip configuration |
| 74 | Flow channel |
| 76 | Tall pin and bottom pin through-passage |

As required, detailed embodiments of the present disclosure are set forth herein; however, it is to be understood that the disclosed embodiments are merely exemplary and may be embodied in various and alternative forms. The figures are not necessarily to scale; some features may be exaggerated or minimized to show details of particular components. Therefore, specific structural and functional details disclosed herein are not to be interpreted as limiting, but merely as a representative basis for teaching one skilled in the art to variously employ the present invention.

## Claims

1. A wastewater treatment facility with one or more rotating biological contactor (RBC) system (1), the facility comprising:
a rotatable shaft (8) that is supported over a wastewater influent;
a control system in communication with the rotatable shaft (8) for control of the rotatable shaft (8);
one or more stages (12, 16, 18) for purifying the wastewater influent, at least one of the one or more stages (12, 16, 18) being oriented transversely to the rotatable shaft (8) and having one or more disk assemblies with a number of disks (20);
at least some of the disks (20) also having a front face (31) and a back face (32); wherein:
- the control system influences the rotational speed of the rotatable shaft (8), its time of rotation, its direction of rotation, its angular acceleration and its angular deceleration, the control system being programmed to avoid an overloaded accretion of biomass on the disk assemblies by monitoring the current flow (I) or power (W), so that if the current flow (I) required to drive the motor and the reducing gearbox and thus to rotate the rotatable shaft (8) exceeds a certain level, the current flow (I) is reduced, the rotational speed of the shaft diminishes, and its direction of rotation can be reversed if desired after a period of rest,
the control system also providing a slow buildup in speed as the rotational speed of the rotatable shaft (8) rises from 0 to a desired angular speed;
- at least some of the disks (20) comprise an inner planar monolithic surface (13) that surrounds the rotatable shaft (8) to promote biomass slough off and one or more concentric rings of segments (34) that circumscribe the inner planar monolithic surface (13);
- the inner planar monolithic surface (13) defines a non-circular aperture (9) that receives and engages with the rotating shaft (8), the aperture (9) receiving the rotatable shaft (8) in registration so that the rotatable shaft (9) and the disk (20) move in unison without slippage;
- the concentric rings of segments (28) include one or more intermediate rings with segments (28) that are joined to the periphery of the inner planar monolithic surface (13) and an outer ring of segments (28) that are connected to the periphery of the one or more intermediate rings of segments (28);
- at least some of the segments (28) are provided with:
two generally radially extending edges (29);
two circumferential edges (30) that extend between the two radially extending edges (29);
a first snap-fit engagement feature (63) extending from a radially extending edge (29) of a segment (28); and
a second snap-fit engagement feature (61) extending from an opposing radially extending edge (29) of another segment (28) that enables adjacent segments (28) to be fastened and thus cooperate to form a portion of a disk (20);
- and at least some of the disks (20) also have:
a plurality of turbulating posts (33) extending from the front and back faces (31, 32) for agitating wastewater and offering surfaces to which microorganisms may attach for consuming contaminants from the wastewater and degrading the microorganisms, wherein the inner planar monolithic surface (13) lacks turbulating posts (33); and
a plurality of tubular connecting extensions (64, 66) extending from the front and back faces (31, 32), the tubular connecting extensions (64, 66) having tips and tip heights that exceed a height of the plurality of turbulating posts (33) so that adjacent disks (20) in a disk assembly are connected and spaced apart by a mating relationship between the tips of the facing connecting extensions.

2. The wastewater treatment facility according to claim 1, wherein one or more of the disks (20) have a diameter up to about 4572mm (15 feet).

3. The wastewater treatment facility according to claim 1, wherein the one or more stages (12, 16, 18) comprise a first stage (12) and a second stage (16) that each have two disk (20) assemblies and a third stage (18) that has one disk (20) assembly.

4. The wastewater treatment facility according to claim 1, wherein the number of disks (20) in a disk assembly is 2 - 99.

5. The wastewater treatment facility according to claim 1, wherein one or more disks (20) lie in a plane having a topography that is substantially flat or curved with an axis of symmetry that lies parallelly to the rotatable shaft (8).

6. The wastewater treatment facility according to claim 1, wherein a curved topography lies substantially in the inner planar monolithic surface (13) of the disk (20).

7. The wastewater treatment facility according to claim 1, wherein the one or more stages (12, 16, 18) comprise:
a first stage (12) which treats active microorganisms and sludge so that the microorganisms attach themselves to a surface of a disk (20) in a disk assembly in the first stage (12), multiply, form a biomass, and feed off contaminants using oxygen provided by ambient air;
a second stage (16) that houses microorganisms including biodegradable trace elements and other contaminates;
a third stage (18) in which ammonia and nitrogen comprise a majority of biodegradable contaminates remaining; and
a fourth stage in which a majority of the microorganisms include nitrifiers.

8. The wastewater treatment facility according to claim 1, wherein wastewater treated in a first stage (12) enters a second stage (16) for additional cleaning and to a third stage (18) to remove impurities and flows to a secondary settling tank (19) before ducting clean water to a river, pond or underground.

9. The wastewater treatment facility according to claim 1 wherein the non-circular aperture (9) in the inner planar surface (13) has a pair of opposing flat edges that are joined by opposing arcuate edges and the rotatable shaft (8) has a pair of opposing flat longitudinally extending and rounded splines, the non-circular aperture (9) receiving the rotatable shaft (8) in registration so that the rotatable shaft (8) and the disk (20) move in unison without slippage.

10. The wastewater treatment facility according to claim 1 wherein the control system comprises:
a user interface including a touch screen for monitoring operational data and entering parameters for adjusting operation of the one or more rotating biological contactor system (1);
a programmable logic controller in communication with the user interface;
a power supply;
switching means for closing an electrical circuit that includes the user interface, the programmable logic controller and the power supply;
circuit breaker means for interrupting current flow in the electrical circuit; and
an inverter drive for changing current flow to the motor that is electrical.

11. The wastewater treatment facility of claim 1, with:
the one or more rotating biological contactor system (1) having a fluid inlet (4) and a processed water outlet (6); ;
a dead biomass dump positioned below the one or more stages (12, 16, 18); and
a wheel (7) mounted on the rotatable shaft (8), the wheel (7) having one or more cups (26) that entrap ambient air and scoop the wastewater to promote agitation and oxygenation.

12. The wastewater treatment system according to claim 11 wherein the wheel (7) is a mixing wheel that agitates wastewater influent into a semi-cylindrical trough and adds air to one of the one and more stages (12, 16, 18).

13. A method for purifying wastewater in a wastewater treatment facility according to claim 1, comprising the steps of:
introducing a wastewater influent into the rotating biological contactor system (1) with the reversibly rotatable shaft (8) that supports and propels a plurality of disks (20) that are partially submerged in the wastewater influent, a disk assembly being bounded by end plates and one or more disks assemblies being combined together to form the one or more stages (12, 16, 18) in the rotating biological contactor system (1), such stages on the rotatable shaft (8) being mounted so that the rotatable shaft may rotate the assemblies in unison;
providing a waterwheel (7) that includes T-shaped fittings that scoop ambient air into wastewater, thereby promoting oxygenation and fluid agitation, regardless of the direction of rotation;
permitting ambient air to react with microorganisms included in the wastewater so that a biofilm is formed on the disks (20) in the disk assemblies, the biofilm metabolizing organic materials contained in the wastewater; and
removing excess solids that are sloughed off from the disk assemblies following turbulence and chemical reaction, thereby purifying the incoming wastewater.

## Patentansprüche

1. Abwasseraufbereitungsanlage mit einem oder mehreren biologischen Rotationstauchkörper(RBC)-Systemen (1), wobei die Anlage aufweist:
eine drehbare Welle (8), die über einem Abwasserzulauf gelagert ist,
ein Steuersystem, welches zur Steuerung der drehbaren Welle (8) mit dieser verbunden ist,
eine oder mehrere Stufen (12, 16, 18) zum Reinigen des zulaufenden Abwasser, wobei mindestens eine Stufe der einen oder mehreren Stufen (12, 16, 18) quer zu der drehbaren Welle (8) angeordnet ist, und eine oder mehrere Scheibenanordnungen mit einer Anzahl von Scheiben (20) aufweist,
wobei mindestens einige der Scheiben (20) eine Vorderseite (31) und eine Rückseite (32) aufweisen,
wobei:
- das Steuersystem die Drehgeschwindigkeit der drehbaren Welle (8), deren Drehzeitdauer, deren Drehrichtung, deren Winkelbeschleunigung und deren Winkelverzögerung beeinflusst, wobei das Steuersystem programmiert ist, um eine überladene Anlagerung von Biomasse auf den Scheibenanordnungen zu vermeiden durch Überwachung des Stromflusses (I) oder der Leistung (W), sodass, wenn der Stromfluss (I), der erforderlich ist, um den Motor und das Reduktionsgetriebe anzutreiben, und somit um die drehbare Welle (8) zu drehen, ein bestimmtes Niveau überschreitet, der Stromfluss (I) reduziert wird, die Drehgeschwindigkeit der Welle abnimmt und deren Drehrichtung nach einer Pause, falls gewünscht, umgedreht werden kann,
wobei das Steuersystem ferner die Drehgeschwindigkeit langsam steigen lässt, wenn die Drehgeschwindigkeit der drehbaren Welle (8) von Null zu einer gewünschten Drehgeschwindigkeit ansteigt,
- wobei mindestens einige der Scheiben (20) eine innere ebene einteilige Fläche (13) aufweisen, die die drehbare Welle (8) umgibt, um das Abführen von Biomassenschlamm zu fördern, und einen oder mehrere konzentrische Ringe aus Segmenten (34), die die innere ebene einteilige Fläche (13) umschreiben,
- wobei die innere ebene einteilige Fläche (13) eine nichtkreisförmige Öffnung (9) aufweist, die die sich drehende Welle (8) aufnimmt und mit dieser in Eingriff steht, wobei die Öffnung (9) die drehbare Welle (8) im Eingriff aufnimmt, sodass die drehbare Welle (9) und die Scheibe (20) sich gleichlaufend ohne Schlupf bewegen,
wobei die konzentrischen Ringe aus Segmenten (28) einen oder mehrere mittlere Ringe aufweisen mit Segmenten (28), die mit dem Umfang der inneren ebenen einteiligen Fläche (13) verbunden sind, und einen äußeren Ring aus Segmenten (28), die mit dem Umfang eines oder mehrerer mittlerer Ringe aus Segmenten (28) verbunden sind,
wobei mindestens einige der Segmente (28) versehen sind mit:
zwei sich im Wesentlichen radial erstreckenden Kanten (29),
zwei in Umfangsrichtung verlaufenden Kanten (30), die sich zwischen zwei sich radial erstreckenden Kanten (29) erstrecken,
einem ersten Verrastungs-Eingriffselement (63), welches sich von einer radial verlaufenden Kante (29) eines Segments (28) aus erstreckt, und
einem zweiten Verrastungs-Eingriffselement (61), welches sich von einer gegenüberliegenden radial erstreckenden Kante (29) eines anderen Segments (28) erstreckt, was es benachbarten Segmenten (28) erlaubt, aneinander befestigt zu werden, und die somit zusammenwirken, um einen Teil einer Scheibe (20) zu bilden,
- und wobei mindestens einige der Scheiben (20) ferner aufweisen:
eine Mehrzahl verwirbelnder Stifte (33), die sich von den Vorderseiten und den Rückseiten (31, 32) erstrecken, um Abwasser durchzurühren und um Oberflächen anzubieten, an denen sich Mikroorganismen anheften können, um Verunreinigungen aus dem Abwasser zu konsumieren, und um die Mikroorganismen abzubauen, wobei die innere ebene einteilige Fläche (13) keine verwirbelnde Stifte (33) aufweist, und
eine Mehrzahl rohrförmiger Verbindungsverlängerungen (64, 66), die sich von der Vorder- und der Rückseite (31, 32) aus erstrecken, wobei die rohrförmigen Verbindungsverlängerungen (64, 66) Spitzen und Spitzenhöhen aufweisen, die die Höhe der Mehrzahl von Verwirbelungsstiften (33) überschreiten, sodass benachbarte Scheiben (20) in einer Scheibenanordnung miteinander verbunden und voneinander beabstandet sind durch eine passende Beziehung zwischen den Spitzen der sich gegenüberliegenden Verbindungsverlängerungen.

2. Abwasseraufbereitungsanlage nach Anspruch 1, wobei eine oder mehrere der Scheiben (20) einen Durchmesser von bis zu etwa 4572 mm (15 Fuß) aufweisen.

3. Abwasseraufbereitungsanlage nach Anspruch 1, wobei die eine oder die mehreren Stufen (12, 16, 18) eine erste Stufe (12) und eine zweite Stufe (16) aufweisen, die jeweils zwei Scheiben(20)-Anordnungen aufweisen, und eine dritte Stufe (18), die eine Scheiben(20)-Anordnung aufweist.

4. Abwasseraufbereitungsanlage nach Anspruch 1, wobei die Anzahl der Scheiben (20) in einer Scheibenanordnung zwischen 2 und 99 beträgt.

5. Abwasseraufbereitungsanlage nach Anspruch 1, wobei eine oder mehrere Scheiben (20) in einer Ebene liegen, die eine Topographie aufweist, die im Wesentlichen eben oder gekrümmt ist mit einer Symmetrieachse, die parallel zu der drehbaren Welle (8) verläuft.

6. Abwasseraufbereitungsanlage nach Anspruch 1, wobei eine gekrümmte Topographie im Wesentlichen in der inneren ebenen einteiligen Fläche (13) der Scheibe (20) liegt.

7. Abwasseraufbereitungsanlage nach Anspruch 1, wobei die eine oder mehrere Stufen (12, 16, 18) aufweisen:
eine erste Stufe (12), die aktive Mikroorganismen und Schlamm aufbereitet, sodass die Mikororganismen sich an einer Oberfläche einer Scheibe (20) in einer Scheibenanordnung in der ersten Stufe (12) ansetzen, vermehren, eine Biomasse bilden und sich von Verunreinigungen ernähren unter Verwertung von Sauerstoff, der von der Umgebungsluft geliefert wird,
eine zweite Stufe (16), die Mikroorganismen beherbergt, die biologisch abbaubare Spurenelemente und andere Verunreinigungen umfassen,
eine dritte Stufe (18), in der Ammoniak und Stickstoff eine Mehrheit von verbleibenden biologisch abbaubaren Verunreinigungen aufweisen, und
eine vierte Stufe, in der eine Mehrheit der Mikroorganismen Nitrifikanten aufweisen.

8. Abwasseraufbereitungsanlage nach Anspruch 1, wobei in einer ersten Stufe (12) aufbereitetes Abwasser in eine zweite Stufe (16) für eine zusätzliche Reinigung eintritt und in eine dritte Stufe (18), um Verunreinigungen zu entfernen, und wobei das Abwasser in eine zusätzliche Absetzstufe (19) fließt, bevor sauberes Wasser in einen Fluss, einen Teich oder den Untergrund geleitet wird.

9. Abwasseraufbereitungsanlage nach Anspruch 1, wobei die nichtkreisförmige Öffnung (9) in der inneren ebenen Fläche (13) ein Paar sich gegenüberliegender flacher Kanten aufweist, die durch sich gegenüberliegende gebogene Kanten verbunden sind, und wobei die drehbare Welle (8) ein Paar sich gegenüberliegender, längs erstreckender und abgerundeter Profile aufweist, wobei die nichtkreisförmige Öffnung (9) die drehbare Welle (8) in Eingriff aufnimmt, sodass die drehbare Welle (8) und die Scheibe (20) ohne Schlupf sich gleichlaufend bewegen.

10. Abwasseraufbereitungsanlage nach Anspruch 1, wobei das Steuersystem aufweist:
eine Anwenderschnittstelle mit einem Touchscreen zur Überwachung von Betriebsdaten und zum Eingeben von Parametern zum Justieren des Betriebs des einen oder mehrerer biologischer Rotationstauchkörpersystemen (1),
eine frei programmierbare Steuerung, die mit der Anwenderschnittstelle in Verbindung steht,
eine Stromversorgung,
Schaltmittel zum Schließen eines elektrischen Kreises, der die Anwenderschnittstelle, die frei programmierbare Steuerung und die Stromversorgung umfasst,
Stromkreisunterbrechermittel zum Unterbrechen des Stromflusses in dem elektrischen Kreis, und
einen Umrichter zum Ändern des Stromflusses zu dem Elektromotor.

11. Abwasseraufbereitungsanlage nach Anspruch 1, mit:
dem einen oder mehreren biologischen Rotationstauchkörper-Systemen (1) mit einem Fluideinlass (4) und einem Auslass (6) für aufbereitetes Wasser,
einem Abladeplatz für tote Biomasse, der unterhalb der einen oder mehreren Stufen (12, 16, 18) angeordnet ist, und
einem Rad (7), welches auf der drehbaren Welle (8) montiert ist, wobei das Rad (7) einen oder mehrere Töpfe (26) aufweist, die Umgebungsluft auffangen und das Abwasser schöpfen, um dessen Bewegung und Anreicherung mit Sauerstoff zu fördern.

12. Abwasseraufbereitungsanlage nach Anspruch 11, wobei das Rad (7) ein Mischrad ist, welches Abwasser bewegt, welches in einen halbzylinderförmigen Trog fließt und welches einer der einen oder mehreren Stufen (12, 16, 18) Luft zufügt.

13. Verfahren zum Reinigen von Abwasser in einer Abwasseraufbereitungsanlage nach Anspruch 1, mit den Schritten:
Einführen von zulaufendem Abwasser in das biologische Rotationstauchkörper-System (1) mit der umkehrbar drehbaren Welle (8), die eine Mehrzahl von Scheiben (20) trägt und antreibt, die teilweise in das zulaufende Abwasser eingetaucht sind, wobei eine Scheibenanordnung durch Endplatten eingegrenzt ist und eine oder mehrere Scheibenanordnungen miteinander kombiniert sind, um die eine oder mehrere Stufen (12, 16, 18) in dem biologischen Rotationstauchkörper-System (1) zu bilden, wobei solche Stufen auf der drehbaren Welle (8) montiert sind, sodass die drehbare Welle die Anordnungen im Gleichlauf drehen kann,
Vorsehen eines Wasserrads (7), das T-förmige Ausrüstungen aufweist, die Umgebungsluft in das Abwasser schaufeln, wodurch eine Anreicherung mit Sauerstoff und eine Fluidbewegung unabhängig von der Drehrichtung gefördert werden,
Ermöglichen, dass Umgebungsluft mit Mikroorganismen reagiert, die sich in dem Abwasser befinden, sodass auf den Scheiben (20) in der Scheibenanordnung ein Biofilm gebildet wird, wobei der Biofilm sich in dem Abwasser befindende organische Materialien umwandelt, und
Entfernen überschüssiger Festkörper, die von den Scheibenanordnungen abgestreift werden infolge von Turbulenzen und chemischen Reaktionen, wodurch das einlaufende Abwasser gereinigt wird.

## Revendications

1. Installation de traitement des eaux usées avec un ou plusieurs systèmes (CBR) de contacteurs biologiques rotatifs (1); l'installation comprend:
un arbre pivotable (8) qui est maintenu au-dessus d'eaux usées à traiter;
un système de commande fonctionnant avec l'arbre pivotable (8) afin de commander l'arbre pivotable (8);
un ou plusieurs étages (12, 16, 18) pour purifier les eaux usées, au moins un de ces un ou plusieurs étages (12, 16, 18) étant orienté de façon transversale par rapport à l'arbre pivotable (8) et comportant un ou plusieurs ensembles de disques avec un certain nombre de disques (20);
au moins certains des disques (20) ont aussi une face avant (31) et une face arrière (32);
dans laquelle:
le système de commande influence la vitesse de rotation de l'arbre pivotable (8), le temps et le sens de rotation, son accélération angulaire et sa décélération angulaire, le système de commande étant programmé pour éviter une surcharge par accumulation de biomasse dans les ensembles de disques en contrôlant le débit de courant (I) ou la puissance d'alimentation (W) de sorte que si le débit de courant (I) requis pour commander un moteur d'entraînement et une boite de démultiplication pour ainsi faire tourner l'arbre pivotable (8) dépasse un certain niveau, le débit de courant (I) est réduit, la vitesse de rotation de l'arbre diminue et son sens de rotation peut être inversé, si désiré après un temps de repos,
le système de commande prévoyant aussi une accélération progressive lorsque la vitesse de rotation de l'arbre pivotable (8) passe de 0 à la vitesse angulaire souhaitée;
au moins certains desdits disques (20) comprenant:
une surface monolithique planaire intérieure (13) qui entoure l'arbre pivotable (8) pour favoriser l'élimination de biomasse et un ou plusieurs cercles concentriques de segments (34) qui circonscrivent la surface monolithique planaire intérieure (13);
la surface monolithique planaire intérieure (13) définissant une ouverture non-circulaire (9) qui reçoit et vient en prise avec l'arbre pivotable (8), l'ouverture (9) recevant l'arbre pivotable (8) étant en regard afin que l'arbre pivotable (9) et le disque (20) se déplacent d'un même mouvement sans patiner;
les cercles concentriques de segments (28) incluant un ou plusieurs cercles intermédiaires de segments (28) qui sont jointifs à la périphérie de la surface monolithique planaire intérieure (13) et un cercle extérieur de segments (28) dont les segments sont jointifs à la périphérie d'un ou plusieurs cercles intermédiaires de segments (28);
au moins certains des segments (28) sont pourvus de:
deux rebords généralement étendus radialement (29);
deux rebords de circonférence (30) qui s'étendent entre les deux rebords étendus radialement (29);
un premier élément d'emboitement rapide (63) qui s'étend d'un rebord étendu radialement (29) d'un segment (28); et
un second élément d'emboitement rapide (61) qui s'étend d'un rebord opposé étendu radialement (29) d'un autre segment (28) permettant aux segments adjacents (28) d'être liés et ainsi d'opérer ensemble pour former une portion de disque (20);
et au moins certains des disques (20) incluent également:
plusieurs tiges de mélange (33) qui s'étendent depuis les faces avant et arrière (31, 32) pour agiter les eaux usées et fournir des surfaces sur lesquelles les micro-organismes peuvent se fixer pour consommer les substances contaminantes contenues dans les eaux usées et dégrader les micro-organismes, là où la surface monolithique planaire intérieure (13) est dépourvue de tiges de mélange (33); et
plusieurs extensions tubulaires connectables (64, 66) qui s'étendent des faces avant et arrière (31, 32), les extensions tubulaires connectables (64, 66) ayant des extrémités et la hauteur de ces extrémités dépassant la hauteur des tiges de mélange (33) de sorte que les disques adjacents (20) d'un ensemble de disque soient connectés et espacés par une relation de couplage entre les extrémités des extensions connectables qui se font face.

2. Installation de traitement des eaux usées selon la revendication 1, dans laquelle un ou plusieurs disques (20) a un diamètre pouvant atteindre environ 4572 mm (15 pieds).

3. Installation de traitement des eaux usées selon la revendication 1, dans laquelle un ou plusieurs étages (12, 16, 18) comprend un premier étage (12) et un deuxième étage (16) qui ont chacun deux ensembles de disques (20) et un troisième étage (18) qui comporte un ensemble de disques (20).

4. Installation de traitement des eaux usées selon la revendication 1, dans laquelle le nombre de disques (20) dans un ensemble de disques est compris entre 2 et 99.

5. Installation de traitement des eaux usées selon la revendication 1, dans laquelle un ou plusieurs disques (20) se trouvent sur un plan ayant une topographie en majeure partie plate ou convexe avec un axe de symétrie parallèle à l'arbre pivotable (8).

6. Installation de traitement des eaux usées selon la revendication 1, dans laquelle une topographie convexe se trouve en majeure partie dans la surface monolithique planaire intérieure (13) du disque (20).

7. Installation de traitement des eaux usées selon la revendication 1, dans laquelle un ou plusieurs étages (12, 16, 18) comprennent:
un premier étage (12) qui traite les boues et les micro-organismes actifs de sorte que les micro-organismes se fixent à la surface du disque (20) dans un ensemble de disques du premier étage (12), se multiplient et forment une biomasse et se nourrissent des substances contaminantes en utilisant l'oxygène contenu dans l'air ambiant;
un deuxième étage (16) qui contient des micro-organismes notamment des oligo-éléments biodégradables et d'autres substances contaminantes;
un troisième étage (18) dans lequel de l'ammoniac et de l'azote comprennent une majorité de substances contaminantes biodégradables restantes; et
un quatrième étage dans lequel une grande partie des micro-organismes inclut des nitrifiants.

8. Installation de traitement des eaux usées selon la revendication 1, dans laquelle les eaux usées traitées dans le premier étage (12) pénètrent dans le deuxième étage (16) pour un nettoyage supplémentaire et dans le troisième étage (18) pour éliminer les impuretés et s'écoulent dans un bassin de décantation secondaire (19) avant que l'eau propre ne soit canalisée et déversée dans une rivière, un étang ou un réseau souterrain.

9. Installation de traitement des eaux usées selon la revendication 1, dans laquelle l'ouverture non circulaire (9) dans la surface planaire intérieure (13) comporte une paire de rebords plats opposés qui sont liés par des rebords arqués qui se font face et l'arbre pivotable (8) a une paire de cannelures opposées arrondies, plates et étendues longitudinalement, l'ouverture non circulaire (9) accueillant l'arbre pivotable (8) en coïncidence afin que l'arbre pivotable (8) et le disque (20) se déplacent d'un même mouvement sans patiner.

10. Installation de traitement des eaux usées selon la revendication 1, dans laquelle le système de commande comprend:
une interface utilisateur incluant un écran tactile pour contrôler les données de fonctionnement et entrer les paramètres de réglage du fonctionnement d'un ou plusieurs systèmes de contacteurs biologiques rotatifs (1);
un automate programmable de commande fonctionnant avec l'interface utilisateur;
une alimentation électrique;
des moyens de commutation pour fermer un circuit électrique qui inclut l'interface utilisateur, l'automate programmable de commande et l'alimentation électrique;
des moyens disjoncteurs pour interrompre le courant dans le circuit électrique; et
un inverseur d'entraînement pour modifier le flux de courant du moteur qui est électrique.

11. Installation de traitement des eaux usées selon la revendication 1, avec:
un ou plusieurs systèmes de contacteurs biologiques rotatifs (1) ayant une entrée de fluide (4) et une sortie pour l'eau traitée (6);
un bac de recueil pour la biomasse morte situé sous les étages (12, 16, 18); et
une roue (7) montée sur l'arbre rotatif (8), la roue (7) comportant une ou plusieurs godets (26) qui capturent l'air ambiant et remuent les eaux usées pour favoriser l'agitation et l'oxygénation.

12. Installation de traitement des eaux usées selon la revendication 11, dans lequel la roue (7) est une roue mélangeuse qui remue les eaux usées dans une cuve semi-cylindrique et qui introduit l'air dans un ou plusieurs des étages (12, 16, 18).

13. Méthode de purification des eaux usées dans une installation de traitement des eaux usées selon la revendication 1, comprend les étapes suivantes de:
introduction des eaux usées dans le système de contacteur biologique rotatif (1) avec l'arbre pivotable (8) réversible qui soutient et propulse plusieurs disques (20) eux-mêmes partiellement plongés dans les eaux usées,
un ensemble de disque étant lié par des plaques d'extrémité et un ou plusieurs ensembles de disques qui sont combinés pour former un ou plusieurs étages (12, 16, 18) dans le système de contacteur biologique rotatif (1), ces étages étant montés sur l'arbre pivotable (8) de sorte que l'arbre pivotable fait tourner les ensembles à l'unisson;
Installation d'une roue hydraulique (7) qui inclut des attaches en forme de T qui font entrer l'air dans les eaux usées, favorisant ainsi l'oxygénation et l'agitation du fluide quel que soit le sens de rotation;
réaction de l'air ambiant avec des micro-organismes contenus dans les eaux usées de sorte qu'un biofilm se forme sur les disques (20) dans les ensembles de disques, le biofilm métabolisant les matières organiques contenues dans les eaux usées; et
élimination de l'excès de solides qui se sont détachés des ensembles de disques à la suite des turbulences et de la réaction chimique, purifiant ainsi les eaux usées entrantes.
